(19) Europäisches Patentamt

European Patent Office

Office européen des brevets

(11) EP 1 231 797 A1

(12) **EUROPEAN PATENT APPLICATION**

(43) Date of publication:
**14.08.2002 Bulletin 2002/33**

(51) Int Cl.⁷: $H04N\ 13/00$, $G09G\ 3/28$

(21) Application number: **01104234.8**

(22) Date of filing: **22.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.02.2001 EP 01103185**

(71) Applicant: **DEUTSCHE THOMSON-BRANDT GMBH**
**78048 Villingen-Schwenningen (DE)**

(72) Inventors:
• **Weitbruch, Sébastien**
  **78087 Mönchweiler (DE)**
• **Correa, Carlos**
  **78056 VS Schwenningen (DE)**
• **Doyen, Didier**
  **35340 La Bouexière (FR)**

(74) Representative:
**Schäferjohann, Volker Willi, Dipl.-Phys. et al**
**Deutsche Thomson-Brandt GmbH**
**European Patent Operations**
**Karl-Wiechert-Allee 74**
**30625 Hannover (DE)**

(54) **Stereoscopic plasma display with interlacing of fields**

(57)    The number of available sub-fields for stereoscopic displaying on plasma display panels is not high enough to insure a good grey-scale portrayal as well as a good false contour behaviour. Thus, the number of sub-fields is artificially increased by commonly addressing the sub-fields of two or more pixel lines so that the addressing time of the panel may be decreased for each sub-field.

Fig. 9

EP 1 231 797 A1

**Description**

The present invention relates to a method and device for processing video pictures for stereoscopic displaying on a display device. The invention deals with the improvement of stereoscopic picture quality. In particular, the quality of stereoscopic pictures displayed on plasma display panels (PDP) shall be improved.

Background

Plasma technology allows achieving flat displays with large size, very limited depth and without relevant viewing angle constraints. For these reasons, the PDPs are really suitable for use in stereoscopic vision. This display causes no geometric distortion in the displayed image and therefore enables a precise depth expression of stereoscopic images. In addition, the big size of such a display suits very well to a strong impression of volume.

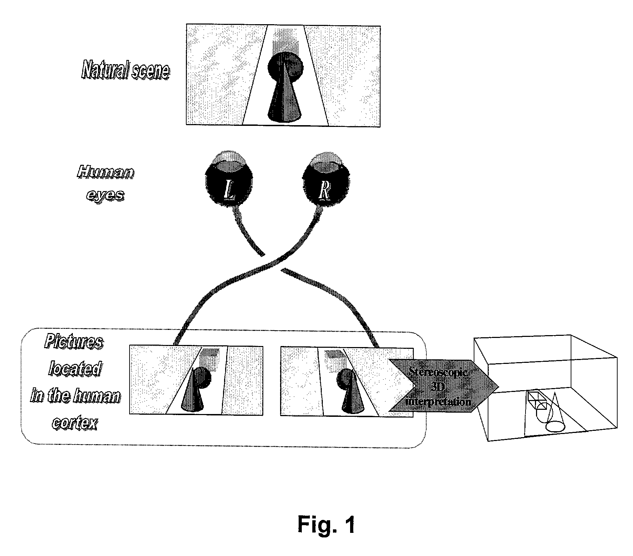

The 3D perception from the Human Visual System (HVS) is based on the close side-by-side position of the eyes. Each eye takes a view of the same area from a slightly different angle. These two separate images are sent to the brain for processing. When the two images arrive simultaneously in the visual centre of the brain, they are united into one picture as shown in Fig. 1. The mind combines the two images by matching up the similarities and adding the small differences to catch finally a three-dimensional stereo picture. With stereovision, the HVS sees an object as solid in three spatial dimensions (width, height and depth) and it is the added perception of the depth dimension that makes stereovision so rich and special. Moreover, a stereo picture will increase the impression of sharpness in the brain.

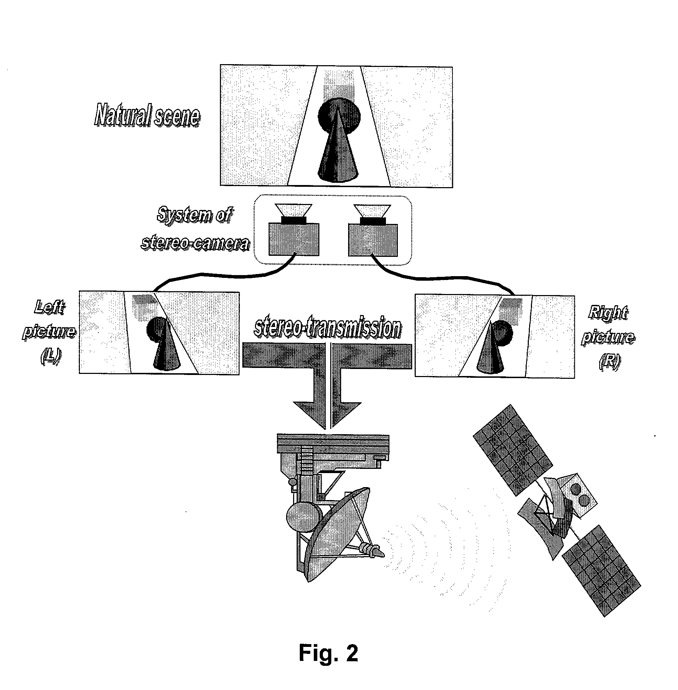

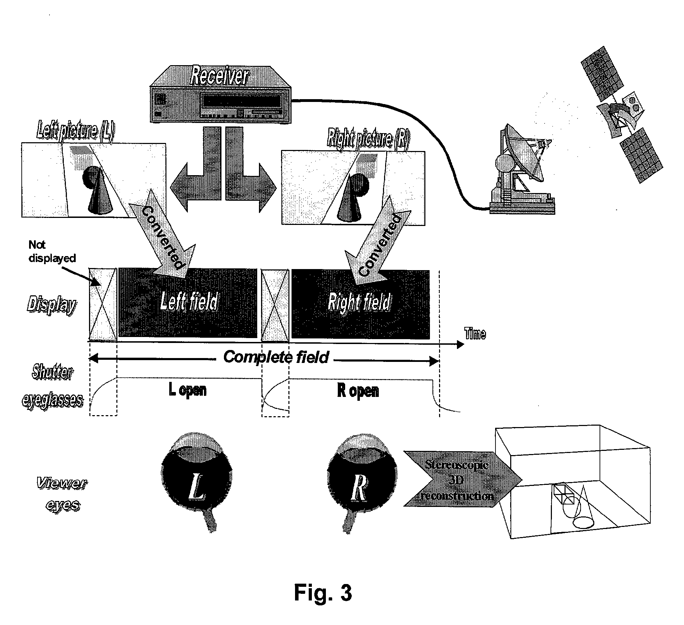

3D images are generated with the help of two video cameras positioned side-by-side in a similar way than the human eyes. Other methods mainly based on complex software are also able to generate artificial stereo pictures by ray tracing (simulation of light propagation). These images, shall be called left and right images. The principle of stereoscopic broadcasting is based on the transmission of both images. This global concept is shown in Fig. 2. If right and left images are displayed sequentially from a source, and a synchronized shutter system in front of the eye allows the right image to only enter the right eye and conversely, then the stereovision can be observed as shown in Fig. 3. The shutter can be mounted in glasses, which are matched with a display in which two constituent pictures are presented in alternation instead of simultaneously. The glasses occlude one eye and then the other in synchronism with the image displaying. This method is often called "field sequential". This method avoids the retinal rivalry caused by anaglyph viewing (another method based on a two-color glasses associated with a two-color picture - each color related to one eye and resulting in a monochrome stereoscopic vision, very old method traced back to 1858). Nevertheless, this "field-sequential" method can introduce other discomfort such as the increase of flicker, the introduction of time parallax between the two images, or the possibility of "ghosting" between the image due to phosphor persistence. Most glasses-shutter systems use LCDs which function with polarized light. Currently, glasses using LCDs can provide good switching speed and reasonable extinction of the alternative lenses. The electro-optical polarizing shutter available on the market today transmits only 30 % of the unpolarized input light (rather than 50 % for perfect polarizers) and this reduces a lot the image brightness. A better solution could be available in the future. Some of the eyeglass shutter systems known today are connected by wires to the monitor, others are controlled by infrared and are wireless.

The displaying of stereo pictures on a Plasma screen needs also the possibility to display two different pictures per frame, which is a new challenge for this technology.

A PDP utilizes a matrix array of discharge cells, which can only be "ON" or "OFF". Also unlike a CRT or LCD in which grey levels are expressed by analog control of the light emission, a PDP controls the grey level by modulating the number of light pulses per frame (sustain pulses). The eye will integrate this time-modulation over a period corresponding to the eye time response. To perform a greyscale rendition, the plasma display is commonly divided in sublighting periods called sub-fields each one being separately controllable by a bit entry in a sub-field code word. Let us assume, we want to dispose of 8 bit luminance levels, in that case each level will be represented by a combination of the 8 following bits:

**1 - 2 - 4 - 8 - 16 - 32 - 64 - 128**

To realize such a coding with the PDP technology, the frame period will be divided in 8 lighting periods (called sub-fields), each one corresponding to a bit. The number of light pulses for the bit "2" is the double as for the bit "1", and so forth. With these 8 sub-periods, we are able through sub-field combination, to build the 256 grey levels.

A simple method to implement a stereoscopic displaying is based on the separation of sub-fields into Left (L) and Right (R) groups which are synchronized with the open and close of the LCD shutter glasses. It is a further advantage of this method that with the same display 2D and 3D pictures can easily be generated by a simple change of the sub-field encoding process. There are 3D plasma displays available with appropriate front filters consisting of a plurality of lenses for directing the light of dedicated pixels to the different eyes where this is not the case.

For the following explanations, it is assumed that the PDP is able to display 12 sub-fields per frame in 60Hz mode (16.67 ms). In addition the assumption is made that the temporal response of the shutter eyeglasses is in the size of the time needed for one sub-field.

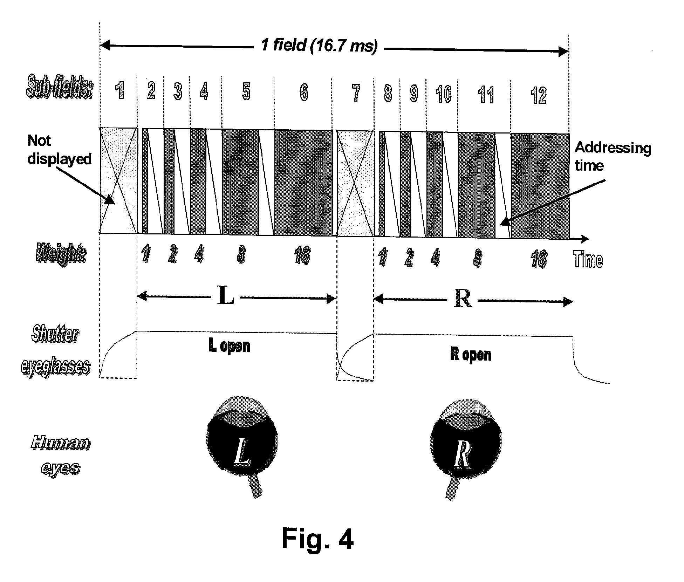

Fig. 4 shows a light emission scheme, which has twelve sub-fields per frame in 60Hz mode (16.7 ms). Six sub-fields are assigned to each of the left and right images and, the temporal response of the shutter-eyeglasses makes the first sub-field of each R and L images unusable for grey-scale rendition.

In the example of Fig. 4, the grey-scale rendition will be limited to 32 grey-levels because only five sub-fields can be used for each of the L and R pictures. This limitation is unacceptable for a consumer product since it will lead to a strong degradation of the picture quality. In addition, such a sub-fields encoding is a pure linear binary code, which has a very bad behaviour in terms of false contour effect and panel response fidelity.

Moreover, it is well known that the stereoscopic displaying by field separation increases the impression of flickering, the so-called "large-area flickering", already strong in the case of standard 50Hz displaying (European countries). The "field-separation" method further introduces the well-known time parallax problem, which occurs if an object is moving from the right to the left but the display order is first displaying the left picture and then the right picture. In such a case the paradox situation occurs, that the moving appears first at the left side and then at the right side. The brain notices the wrong display order and perceives an artefact.

Invention

In view of the above it is the object of the present invention improve picture quality, especially the time parallax problem shall be reduced and to insure a good grey-scale portrayal as well as a good false contour behaviour of plasma display panels for stereoscopic displaying.

According to the present invention the method of claim 1 and the device of claim 6 solve this object. Favourable further developments are defined in the sub-claims.

The grouping of sub-fields in two left and right sub-field groups and the displaying of the sub-field groups in interleaved or interlaced manner, improves very much the time parallax problem. It also provides a bonus effect in regard to the large area flickering problematic, which is likewise reduced.

The grey-scale portrayal improvement and false contour effect reduction comes merely from the measures specified in the dependent claims. The so-called bit-line-repeat sub-field encoding technique where for corresponding pixels of two or more pixel lines sub-field code words are determined, which have identical entries for a number of sub-fields called common sub-fields serves for a artificial increase of a number of sub-fields. Thus, the addressing time of the panel may be decreased so that a better sub-field coding for both grey-scale portrayal and false contour behaviour may be obtained.

Addressing time can also be saved, when before sub-field encoding the input left and right pictures are down converted/decimated. E.g. every second line can be taken for displaying and on the display this line is repeated twice. Of course, this measure is accompanied by a greater reduction of vertical resolution.

Drawings

The present invention will be explained in more detail in connection with the attached drawings. In the drawings:

Fig. 1 shows the principle of stereoscopic vision;

Fig. 2 shows the principle of stereoscopic broadcasting;

Fig. 3 shows the principle of stereoscopic displaying;

Fig. 4 shows the principle of stereoscopic displaying on a plasma display panel;

Fig. 5 shows the principle of line-repetition on a plasma display panel;

Fig. 6 shows the increase of sub-fields number by line-repetition;

Fig. 7a shows the bit-line-repeat concept according to the present invention;

Fig. 7b shows an example for bit-line-repeat encoding;

Fig. 8 shows the principle of deriving sub-fields groups from a sub-field organisation with 9 sub-fields;

Fig. 9 shows the principle of interlacing sub-field groups for stereoscopic displaying on a plasma display panel;

Fig. 10 shows the line-repeat method combined with interlacing sub-field groups for stereoscopic displaying on a plasma display panel; and

Fig. 11 shows a circuit implementation of a plasma display panel for stereoscopic displaying.

Preferred Embodiments

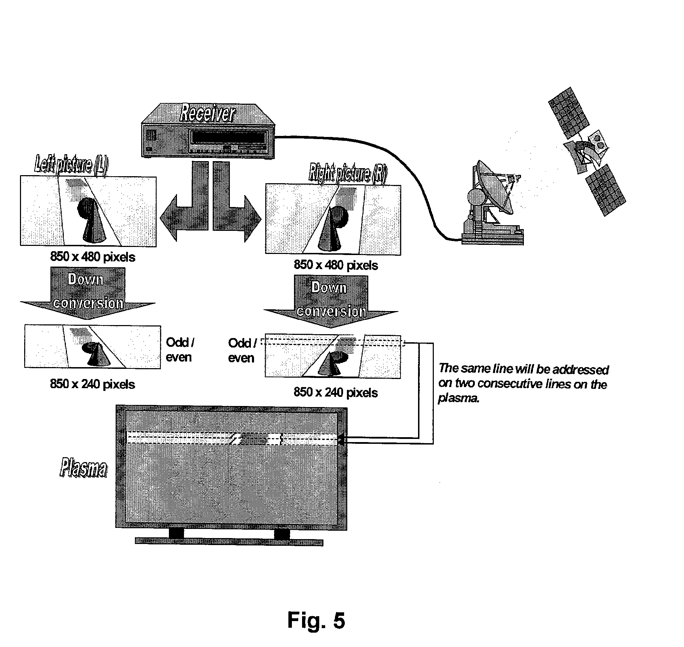

In the following preferred embodiments of the present invention will be described along with Figures 5 to 11.

As already explained in the consistory clause, for stereoscopic displaying on PDPs a problem is that less sub-fields can be used for each left and right picture than for 2D displaying. An increasing of the sub-field number is limited according to the following relation:

$$(1) \qquad n_{SF} \times NL \times T_{ad} + T_{Light} \leq T_{Frame}$$

where $n_{SF}$ represents the number of sub-fields, $NL$ the number of lines, $T_{ad}$ the duration to address one pixel line per sub-field, $T_{Light}$ the lighting duration of the panel and $T_{Frame}$ the frame period. In this consideration the erasing periods are neglected. Obviously, a simple increasing of the sub-field number will reduce the time $T_{Light}$ to light the panel and consequently, will reduce the global brightness and contrast of the panel. This is not possible since the shutter-eyeglasses will already strongly reduce this luminance.

The best possibility to increase the sub-field number is to reduce the time needed to address the plasma display panel. Since the time needed to address one line of the panel is strongly specified by the panel response fidelity itself, a simple way to reduce the complete addressing time is to reduce the number of addressed lines per sub-field.

A first idea is to reduce, for all sub-fields, the number of lines to be addressed by grouping two consecutive lines together. In that case the previous relation is modified to the following one:

$$(2) \qquad 2 \times n_{SF} \times NL/2 \times T_{ad} + T_{Light} \leq T_{Frame}$$

In that example, the number of available sub-fields is multiplied by two for the same brightness and contrast.

In these two previous equations the time needed to erase the panel for each sub-fields has not been taken into consideration. The use of an optimal code (a sub-field organisation with a specific number of sub-fields per frame period and specific gradated sub-field weights can deliver better response fidelity) will enable to slightly reduce the addressing time to be able to correctly erase all new sub-fields.

The main idea behind the concept of line-repetition based on interlaced-fields is based on incoming interlaced pictures. These pictures can come directly from an interlaced source like a TV receiver or can be down-converted from a progressive source. Afterwards, for each field (odd and even) the plasma will scan all the lines two by two in order to make a simple line repetition to generate on the screen a progressive picture. In that case the standard proscan converter used in a plasma TV for 2D pictures will be replaced by a simple line repetition system at the scanning level for 3D pictures. The scanning time of the whole panel will be divided by a factor of two enabling the use of more sub-fields. Fig. 5 illustrates this principle:

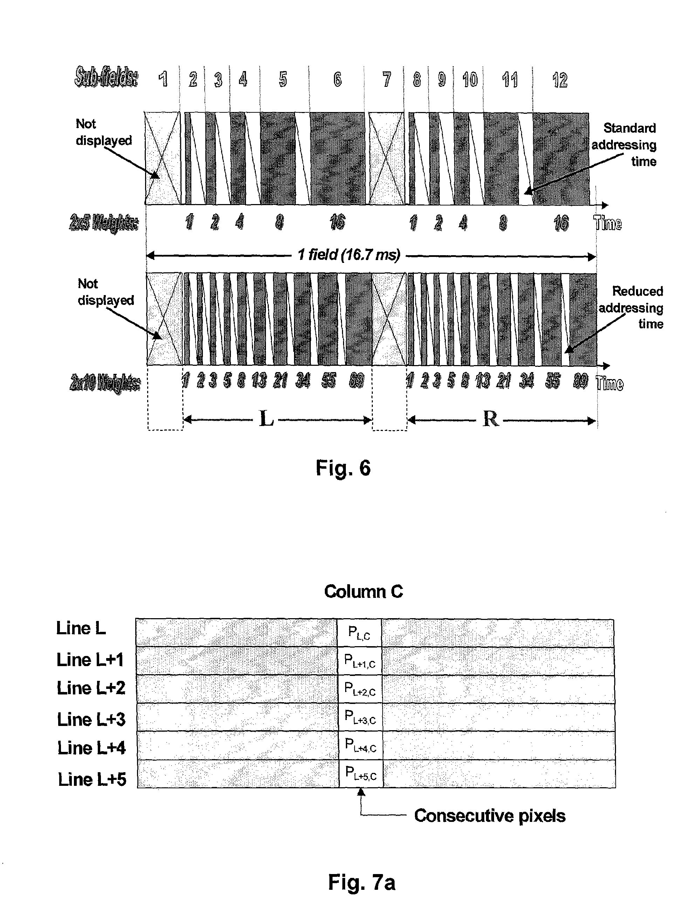

The vertical resolution of the displayed pictures will be reduced by this principle. Nevertheless, as it was already said in the previous paragraphs, the stereoscopic vision reinforces the global sharpness impression which will balance this loss of vertical resolution. In fact, it can be said that pictures displayed in such a manner on a plasma display will have a picture quality similar to those on standard TV sets with interlaced CRT (line flickering, etc.). This is not optimal but on the other side, the time spared can be used to make more sub-fields (with optimised encoding) and then, the gain in terms of grey-scale portrayal as well as response fidelity enhancement is important. Fig. 6 shows a comparison between the standard addressing method and the line-repetition addressing method for a 3D plasma display.

The upper schematic, presented in Fig. 6, represents the standard field separation principle. Only 5 sub-fields are available per left and right picture. In the shown example a standard binary coding is used. With these sub-fields only 32 possible grey levels can be reproduced for each picture. It is denoted that in this example 8 sustain pulses will be generated for each sub-field weight unit. This means that for the sub-field with weight "16" 8*16=128 sustain pulses will be generated. In total, for all sub-fields 255 pulses can be generated.

The schematic below represents the increase of sub-fields by using a line-repetition principle: about 10 sub-fields are available per L and R pictures for the same frame duration. The addressing time for each sub-field is reduced to the half of the standard addressing time.

In this example, an optimal code based on the Fibonacci series has been used in the scope of the 10 sub-fields encoding with a grey-scale rendition based on 232 levels instead of 32:

> 1 - 2 - 3 - 5 - 8 - 13 - 21 - 34 - 55 - 89

This code is described in the European patent application 00250066.8 of the applicant and is an optimal code for the false contour behaviour as well as for the response fidelity, which ensures a further possibility to increase the address speed of the panel. This additional gain of time will give the possibility to correctly erase the 10 sub-fields of the panel. Of course, only one sustain pulse per sub-field weight unit is generated in this case. This explains why the sustain periods are depicted much narrower than in the example above. Making the sustain periods smaller in the upper example and using more sub-fields instead, would mean, that quite a lot of light pulses would be lost, which is unacceptable and thus no alternative.

Indeed, even in the case of line-repeat, still 10 sub-fields have to be erased on the whole panel. Since this time is fixed, a same amount has to be won on the addressing stage to avoid a significant loss of luminance.

The following relation represents all the parameters needed to drive correctly a plasma panel:

$$(3) \qquad n_{SF} \times NL \times T_{ad} + n_{SF} \times T_{er} + T_{Light} \leq T_{Frame}$$

This equation is comparable to the equation (1) but a time $T_{er}$ has been added corresponding to the time needed to erase each sub-field. In that case, if the number of sub-fields shall be increased by two, the number of addressed lines has to be still divided by two (line-repeat) and in addition, the addressing time itself has to be reduced a bit to have enough time to perform twice more erasing. This is only possible trough an increasing of the response fidelity of the panel (optimal encoding method).

As a conclusion this line-repetition method gives the possibility to increase the grey-scale portrayal in case of stereoscopic plasma display panels as well as the false contour behaviour of the panel.

In other words, there may be provided a method for processing video pictures or stereoscopic displaying on a display device by processing at least one interlaced picture including a left picture and a right picture, wherein each line of the left picture and right picture are multiply displayed for obtaining a left picture and a right picture display, so that the addressing time for addressing pixels of the display device is reduced.

The principle of line-repetition presented above enables a better grey-scale rendition as well as a better false contour behaviour but accompanied by a loss of vertical resolution combined with line-flickering. In the following paragraphs, the compromise (time against vertical resolution) shall be improved to further improve the picture quality. This can be done with the concept of Bit-Line-Repeat (BLR) encoding, which principle is described in EP-A-0874349 and EP-A-1058229.

In this concept, some sub-fields only will be duplicated on $n$ consecutive lines to reduce globally the addressing time of the panel. These sub-fields are called common sub-fields since they are common to different lines in the vertical direction. The other sub-fields will be called specific sub-fields since they will be specific to each pixel. The video signal will be specially encoded to reduce the loss of vertical resolution.

In order to simplify the exposition, the erasing time shall not be regarded with the assumption that the use of an optimal code will enable a slight faster addressing which will compensate the new time required to erase all sub-fields. The following relation presents this other concept:

$$(4) \qquad n_{ComzzonSF} \times NL/k \times T_{ad} + n_{specificSF} \times T_{ad} + T_{Light} \leq T_{Frame}$$

where $n_{CommonSF}$ represents the number of common sub-fields and $k$ the number of consecutive lines having the same sub-fields in common.

For the following explanations, the assumption is made that basically 5 sub-fields are provided per "sequential field" (R and L) and that k=6 is chosen. Fig. 7a illustrates this concept. The six pixels located at the same horizontal position but on six consecutive lines will be encoded with the same common sub-fields but their specifity will be encoded with the specific sub-fields.

The following BLR code with 138 levels will be used as example:

> <u>1</u> - <u>2</u> - <u>4</u> - 5 - <u>8</u> - 10 - <u>16</u> - 20 - <u>32</u> - 40

The underlined values represent the common values. This code has the time cost of 5 standard sub-fields (4 specific with normal addressing time + 6 common with a sixth of the addressing time) but improves the grey-scale rendition and the false contour behaviour of the panel. The maximal transition possible in these 6 common lines is limited by the sum of the specific values ($\Sigma$=75). Consequently, there is still a loss of resolution in the picture but this can be optimised with a dedicated encoding algorithm.

The following is an overall presentation of the encoding algorithm:

(1) In the amount of *k* values, select the smaller and bigger values *Vmax* and *Vmin*.

(2) Modify these two values to have a difference *D=(Vmax'-Vmin')* as multiple of five.

(3) Modify all values, which have a difference with *Vmin* which is higher than the maximal available transition ($\Sigma$ of specific values=$SPE_{max}$) to $Vmin+SPE_{max}$.
This new value will be the new highest video value *Vmax"*.

(4) Encode the new maximal value as a standard video value without taking into account the BLR concept.

(5) Check that the sum of all common values from *Vmax"* is smaller than *Vmin'*. If it is not the case, replace the common value from Vmax" by the common values needed to encode Vmin'. These common values will be used for the encoding of all values. We call this code COM_PART since it corresponds to the code based on common sub-fields only.

(6) Encode all the values taking into account this common part COM_PART.

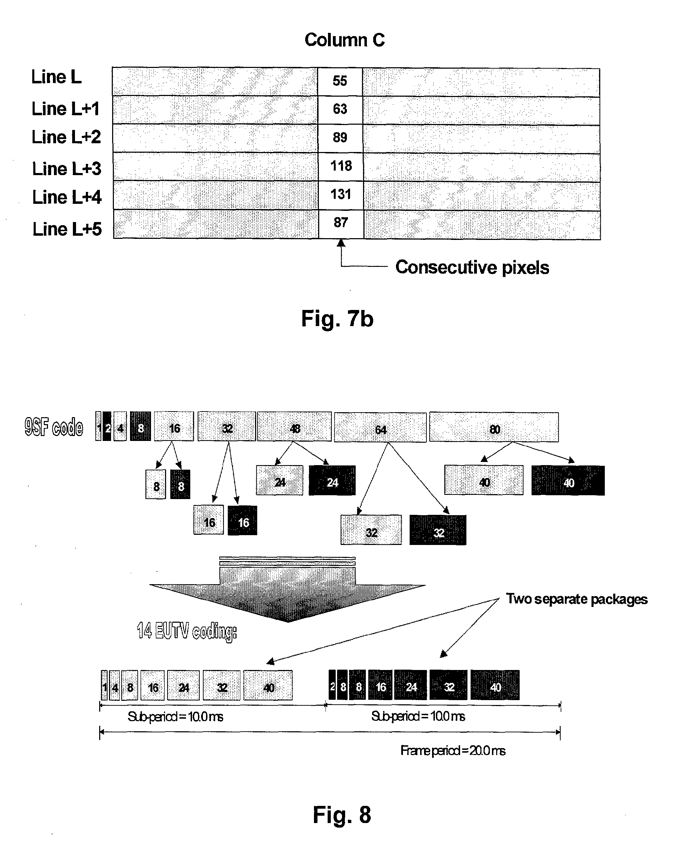

This algorithm shall be illustrated with the help of an example shown in Fig. 7b.

(1) Vmax=131 and Vmin=55.
(2) Vmax'=130 and Vmin'=55 with a difference D=(Vmax'-Vmin')=75=5x15.
(3) Nothing to do.
(4) 130 = 1 + 2 + 4 + 5 + 10 + 16 + 20 + 32 + 40
(5) COM_PART = 1 + 2 + 4 + 16 + 32 = 55. In this example, COMP-PART (55) $\leq$ Vmin'(55)
(6) Encoding of all values:

&#10143; 55 $\Rightarrow$ 1 + 2 + 4 + 16 + 32 = 55 [no error]

&#10143; 63 $\Rightarrow$ 1 + 2 + 4 + 10 + 16 + 32 = 65 [error=2]

&#10143; 89 $\Rightarrow$ 1 + 2 + 4 + 5 + 10 + 16 + 20 + 32 = 90 [error=1]

&#10143; 118 $\Rightarrow$ 1 + 2 + 4 + 5 + 16 + 20 + 32 + 40 = 120 [error=2]

&#10143; 131 $\Rightarrow$ 1 + 2 + 4 + 5 + 10 + 16 + 20 + 32 + 40 = 130 [error=1]

&#10143; 87 $\Rightarrow$ 1 + 2 + 4 + 10 + 16 + 20 + 32 = 85 [error=2]

In the previous example, the lack of freedom coming from the BLR algorithm will introduce some errors in the encoding of the original values. This can lead to the introduction of a new noise in the picture, which is a compromise needed to improve the grey-scale rendition as well as the false contour behaviour. Such an encoding method will enable a grey-scale rendition based on 138 levels instead of 32 with good panel response fidelity combined with a good false contour behaviour. In addition, depending on the picture content, the vertical resolution can be further improved compared to the first proposition of line-repetition.

As previously said, the stereoscopic displaying will reinforce the impression of large area flickering. This effect is already strongly visible in the case of 50Hz frame repetition due to the human eye behaviour. In addition, the large screen size of the plasma display will further increase this effect. For these reasons, it is important to develop a specific mode for 50Hz-stereoscopic plasma displays.

A first concept of specific plasma encoding method (EUTV coding) for solving large area flickering in case of 50Hz frame repetition has already been proposed in EP-A-0 982 708 which is another patent application of the applicant. The principle is based on the fact that, in 50Hz it is possible to display more sub-fields since the frame duration has been increased from 16.67(60Hz) to 20ms (50Hz). The main idea behind this proposition is the generation of an artificial 100Hz component inside this 20ms by grouping the sub-fields in two groups, of similar structure, and displaying the groups in a 10ms raster (fitting with a 100Hz raster). These two sub-field groups are identical in terms of the most significant sub-fields and different in terms of the least significant sub-fields. In addition, a specific coding process that distributes luminance weight symmetrically to the two groups will minimise the 50Hz large area flicker luminance component. In Fig. 8 it is illustrated how the sub-field groups can be derived from a 9 SF sub-field organisation. Some of the sub-fields in the sub-field organisation are split in two parts with equal weights.

In the case of the stereoscopic plasma, a possibility to implement such a method will be to split each of the two "sequential-fields" in two sub-periods to follow the specifications needed by the EUTV principle. These sub-periods shall be called:

➢ (L1) and (L2) for the left picture
➢ (R1) and (R2) for the right picture.

Another artefact introduced by the stereoscopic "sequential-fields" method is the so-called parallax effect. The "sequential-fields" method will first show the picture for the left eye (L) and then the picture for the right eye (R). Assuming an object moving from the right to the left, the human brain expects that the right eye will see the object first. This is not the case for the implementation of "sequential-fields" method with (L) first and (R) later. This inconsistency in the time domain of the stereoscopic picture sent to the human visual system will disturb the viewer and makes the stereoscopic scene less pleasant.

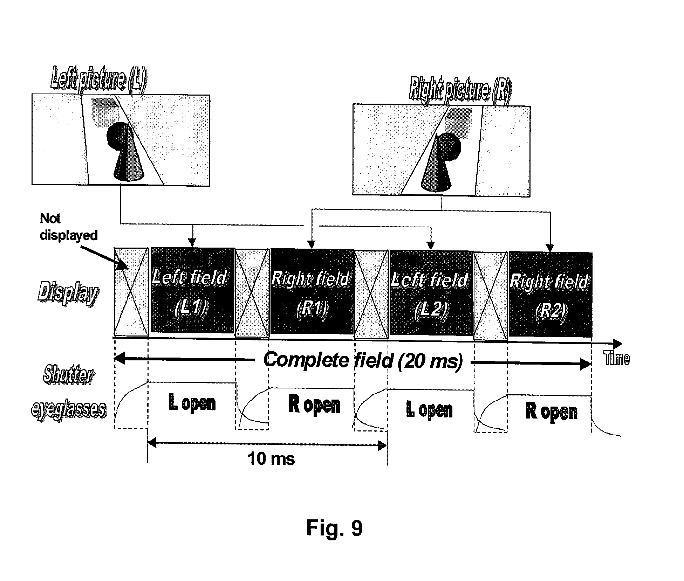

A solution will be to mix the (L) and (R) pictures together. In the case of a EUTV displaying methods, it will lead to the mixing of L1, R1, L2, R2 as presented on Fig. 9, which shows the interleaving of the two sub-components for each Right and Left pictures. This will lead to a reduction of the time-parallax artefact.

In other words, there may be provided a method for processing video pictures for stereoscopic display on a display device having a plurality of luminous elements, one or more of them corresponding to each of the pixels of the video picture, wherein the time duration of a video frame or a video field corresponding to each video picture is divided into a plurality of sub-fields during which the luminous elements can be activated for light emission in small pulses corresponding to a sub-field code word which is used for brightness control, wherein the video frame includes a left and a right field for stereoscopic displaying, and wherein the sub-fields of the left field are grouped into at least two left sub-field groups (L1, L2) and those of the right field are grouped into at least two right sub-field groups (R1, R2) and the left and right sub-field groups (L1, L2, R1, R2) of the video frame are arranged in an interlaced manner.

The plasma display enabling 12 sub-fields per 60Hz frame will be able to display 14 sub-fields in 50Hz mode. Furthermore, in the previous examples, the shutter eyeglasses had a temporal response of about one sub-field. Considering above described stereoscopic EUTV coding (Fig. 9), there is a need of 4 switches of the glasses. In that case, about 10 sub-fields will be available for the coding of the stereoscopic EUTV coding. This is not enough. Therefore, the same line-repetition technique will be implemented in order to dispose of twice more sub-fields.

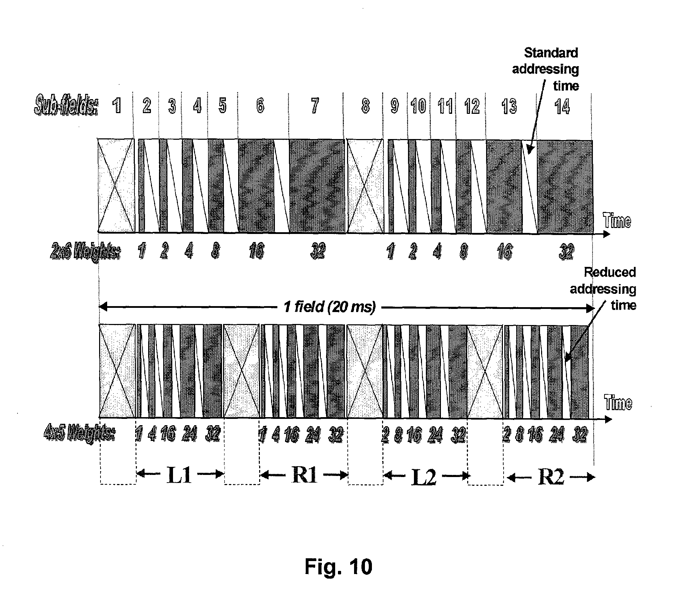

Figure 10 illustrates the implementation of such a stereoscopic EUTV coding based on the following weighting:

**Group1: 1 - 4 - 16 - 24 - 32**
**Group2: 2 - 8 - 16 - 24 - 32**

In this example, the most significant sub-fields (16, 24, and 32 are the same in the two groups. The groups differ in the least significant sub-fields (1, 2, 4, and 8).

The upper schematic, presented in Fig. 10, represents the standard field separation principle applied in the example of 14 sub-fields available at 50Hz with a binary code based on 6 bits (64 grey levels). The schematic below represents the increase of the number of sub-fields by using a line-repetition principle combined with the principle of EUTV coding: about 10 bits are available per L and R picture, each picture split in two groups of 5 sub-fields.

In this example, 160 grey-levels are available with a strong reduction of both large-area flickering and time-parallax artefact.

Compared to the above section, the goal of the following stereoscopic EUTV coding made with the bit-line-repeat (BLR) method will be to increase the number of SF while avoiding the line repetition. It means that most of the time the vertical resolution of the input signal will be kept by using a specific coding scheme.

As it is described, there are two possibilities of BLR coding. The first one uses only redundancies of two adjacent rows. It means that each pixel will be encoded with its neighbour. The final code will contain information specific to the pixel itself and information common with the adjacent pixel. In the above section there have been provided 10 sub-fields per eye using the line-repeat mode, which means full-addressing time for only 5 sub-fields. With the BLR, there are provided 7 sub-fields (3 specific SF + 4 common SF). This is a trade-off between the number of SF and the vertical resolution. The 7 SF are not sufficient to get a full quantification of both common and specific parts of the signal. The information will have to be split and spread in both first and second half-frame. The same coding scheme for R and L information will be used.

Considering the following code:

**2 - 4 - 7 - 14 - 28 - 49 - 56**
there are 4 common SF (2-4-49-56) and 3 specific SF (7-14-28). The sum of all weights is equal to 160 and the sum of specific weights is 49 (30% of 160). In order to increase the ratio of specific bits, each specific weight is a multiple of 7 which introduces an error of +/-2 (this error is limited to +/-1 if weights are multiples of 5.

Now these 7 SF have to be split into two blocks. The rule is to have the same addressing time and the same sum of weight in each block. One solution could be for instance:

**Group 1: 7 - 14- 56** sum = 77 and 2.5 addressing time
**Group 2: 2 - 4 - 28 - 49** sum = 83 and 2.5 addressing time

Both left and right values have the same groups 1 and 2.

As it is explained above the BLR technique may be applied to more than two lines. By this way there may be for instance, up to 10 SF if k=6 with 4 specific SF and 6 common SF (with an addressing cost of 1 SF). Choosing the previous code the video may be coded in the same way:

**1 - 2 - 4 - 5 - 8 - 10 - 16 - 20 - 32 - 40**

This code has to be split into two blocks with the sum of weights balanced and the same addressing time. One solution could be:

**Group 1: 1 - 5 - 8 - 16 - 40** sum = 70 and 2.5 addressing time
**Group 2: 2 - 4 - 10 - 20 - 32** sum = 68 and 2.5 addressing time

As described above, there are two methods to increase the sub-fields number in case of stereoscopic Plasma displaying. It is possible to make the choice between the two solutions depending on the picture content.

➢ The first proposal ("line repetition") introduces some line flickering combined with a loss of vertical resolution due to the combination of two lines. Nevertheless, there is no limitation of the vertical resolution on more than two lines as in the case of BLR. There is a full encoding freedom.

➢ The second proposal based on BLR introduces some artefacts in the picture even with the use of a prefiltering. The number of grey-levels is reduced as the maximal vertical resolution on the $n$ common lines but the vertical resolution is higher as with simple "line repetition".

A possibility to choose between the two solutions is given by a simple analysis of the number of BLR limitations per picture. After counting the number of consecutive common lines having a dynamic range higher than $SPE_{max}$ a decision can be taken between the two modes. This principle can be described as following:

```
For each pixel i
    {
        For each line j
            {
                ValueMin = 255;
                For (t=0; t<k; t++)
                {
                        ValueMin = min(ValueMin; P_{i,j+t})
                }
```

.

```
For (t=0; t<k; t++)

{

 if |Value Min- P_{i,j+t}| > SPE_{max} then BLR_{count}++

}

      }

  }
```

In this algorithm description, $k$ represents the number of common line (e.g. 6 in our example) and $BLR_{count}$ the number of transitions limited by the BLR restrictions. Afterwards, depending on the value of $BLR_{count}$ a decision between line repeat and bit-line-repeat can be taken.

This principle will introduce a frame delay of one frame to change to the optimal mode. Nevertheless, if the modes are well adjusted in terms of luminance, these changes will not be visible. Obviously, the use of hysteresis is strongly recommended to avoid unexpected oscillation effects between the two modes.

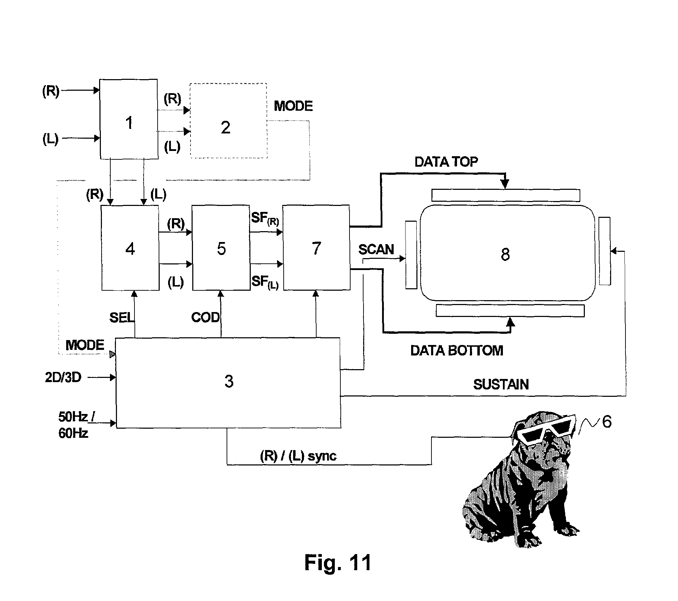

Fig. 11 describes a possible circuit implementation of the present invention. Input Right (R) and Left (L) pictures are forwarded to a degamma function block 1. The output of this block 1 can be forwarded to an optional analysis unit 2 performing a picture analysis to define whether a BLR or a Proscan down-conversion (line-repeat mode) is preferable: There is a MODE-flag which indicates which mode is preferable. A plasma control unit 3, depending on the defined mode (2D or 3D activated, 50Hz or 60 Hz mode), depending also on the optional flag MODE, selects the correct conversion algorithm 4 with a signal SEL and the correct sub-field encoding scheme 5 with a signal COD:

> 2D + 60Hz $\Rightarrow$ no conversion and standard Fibonacci sub-field encoding
> 2D + 50Hz $\Rightarrow$ no conversion and EUTV mode
> 3D + 60Hz $\Rightarrow$ depending on MODE (if available), or depending on circuit specification, specific BLR or proscan down-conversion are activated for stereoscopic encoding
> 3D + 50Hz $\Rightarrow$ depending on MODE (if available), or depending on circuit specification, specific BLR or proscan down-conversion are activated for EUTV stereoscopic encoding

If no picture analysis 2 is available in the circuit implementation, only one mode (BLR or simple line-repeat) has to be chosen and implemented.

The plasma control block 3 takes the decision and allows synchronization between all blocks (e.g. proscan down-conversion with adapted sub-field organisation). This block 3 generates all the plasma control signals and, furthermore, it generates all needed synchronisation signals for the shutter eyeglasses 6. The sub-field code words $SF_{(R)}$ and $SF_{(L)}$ from the sub-field coding unit 5 are forwarded to a serial-parallel conversion unit 7, where driving data for the top and bottom drivers or single drivers of a plasma display panel 8 are generated.

In view of the above, the present invention improves the grey scale portrayal of a plasma display in case of stereoscopic displaying, the false contour behaviour in case of stereoscopic displaying, the panel response fidelity for faster addressing in case of stereoscopic displaying, the large area flickering behaviour in case of 50Hz stereoscopic displaying and the time parallax problem. If no BLR and no picture analysis are implemented, there is virtually no extra cost added (a proscan down-conversion is only a subsampling which has no relevant cost). Only a slight adaptation of the plasma driving electronic should be necessary.

The present invention is applicable to each kind of display dedicated to stereoscopic displaying and using a similar way of grey level rendition method ("pulse width modulation") like DMD, LCOS, etc.

**Claims**

1. Method for processing video pictures for stereoscopic display on a display device (8) having a plurality of luminous elements, one or more of them corresponding to each of the pixels of a video picture, wherein each video picture includes a left and a right picture and wherein the time duration of a video frame or video field is divided into a plurality of sub-fields during which the luminous elements can be activated for light emission in small pulses corresponding to a sub-field code word which is used for brightness control, wherein the video frame corresponding to the video picture includes a left and a right field for stereoscopic displaying, **characterized in that** the sub-fields of the left field are grouped into at least two left sub-field groups (L1, L2) and those of the right field into at least two right sub-field groups (R1, R2) and the left and right sub-field groups (L1, L2, R1, R2) of the video frame are arranged in an interlaced manner in the frame period.

2. Method according to claim 1 with the further step of subdividing one or more of the sub-fields of the left field and right field in two or more smaller sub-fields and distributing the smaller sub-fields among the at least two left/right sub-field groups.

3. Method according to claim 1 or 2 with the further step of determining for corresponding pixels of two or more pixel lines sub-field code words which have identical entries for a number of sub-fields called common sub-fields.

4. Method according to one of claims 1 to 3 with the further step of addressing two or more consecutive pixel lines in each sub-field in parallel, so that in the two or more pixel lines the same video content will be displayed in order to reduce the addressing time.

5. Method according to claim 4, wherein before the step of addressing two or more consecutive pixel lines in each sub-field in parallel, each picture to be processed is down converted by reducing the number of lines respectively.

6. Device for processing video pictures for stereoscopic display on a display device (8) having a plurality of luminous elements, one or more of them corresponding to each of the pixels of a video picture, wherein a video picture includes a left and a right picture, including sub-field coding means (5) for translating the input video data words in sub-field code words according to a specific division of the time duration of a video frame or video field into a plurality of sub-fields during which the luminous elements can be activated for light emission in small pulses corresponding to a sub-field code word which is used for brightness control, wherein the video frame corresponding to the video picture includes a left and a right field for stereoscopic displaying, **characterized in that** sub-field arranging means are provided which group the sub-fields of the left field into at least two left sub-field groups (L1, L2) and those of the right field into at least two right sub-field groups (R1, R2) and which arrange the left and right sub-field groups (L1, L2, R1, R2) of the video frame in an interlaced manner.

7. Device according to claim 6 wherein the sub-field arranging means are designed to subdivide one or more of the sub-fields of the left field and right field in two or more smaller sub-fields and distributing the smaller sub-fields among the at least two left/right sub-field groups and the sub-field coding means (5) are designed to generate the corresponding sub-field code words for this sub-field rearrangement.

8. Device according to claim 6 or 7, wherein control means (3) are provided for controlling the sub-field coding means (5) in such a manner that for corresponding pixels of two or more pixel lines sub-field code words are determined, which have identical entries for a number of sub-fields called common sub-fields.

9. Device according to one of claims 6 to 8, further including conversion means (4) for converting input picture signals, so that two or more consecutive lines are addressable in each sub-field for multiply displaying each line of the picture in order to reduce the addressing time.

10. Device according to claim 9, wherein the conversion means (4) are designed for down converting picture signals by reducing the number of video lines.

**Fig. 1**

**Fig. 2**

**Fig. 3**

Fig. 4

**Fig. 5**

Sub-fields: 1 2 3 4 5 6 7 8 9 10 11 12

Not displayed

Standard addressing time

2x5 Weights: 1 2 4 8 16 1 2 4 8 16 Time

1 field (16.7 ms)

Not displayed

Reduced addressing time

2x10 Weights: 1 2 3 5 8 13 21 34 55 89 1 2 3 5 8 13 21 34 55 89 Time

L R

**Fig. 6**

Column C

| Line L | | $P_{L,C}$ | |
|---|---|---|---|
| Line L+1 | | $P_{L+1,C}$ | |
| Line L+2 | | $P_{L+2,C}$ | |
| Line L+3 | | $P_{L+3,C}$ | |
| Line L+4 | | $P_{L+4,C}$ | |
| Line L+5 | | $P_{L+5,C}$ | |

Consecutive pixels

**Fig. 7a**

## Column C

| | |
|---|---|
| Line L | 55 |
| Line L+1 | 63 |
| Line L+2 | 89 |
| Line L+3 | 118 |
| Line L+4 | 131 |
| Line L+5 | 87 |

Consecutive pixels

## Fig. 7b

9SF code

14 EUTV coding:

Two separate packages

Sub-period = 10.0 ms    Sub-period = 10.0 ms

Frame period = 20.0 ms

## Fig. 8

Fig. 9

**Fig. 10**

**Fig. 11**

## EUROPEAN SEARCH REPORT

**European Patent Office**

**Application Number**

EP 01 10 4234

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 049 068 A (THOMSON MULTIMEDIA SA) 2 November 2000 (2000-11-02) * the whole document * | 1-10 | H04N13/00 G09G3/28 |
| Y | PATENT ABSTRACTS OF JAPAN vol. 2000, no. 05, 14 September 2000 (2000-09-14) & JP 2000 036969 A (NIPPON HOSO KYOKAI &LT;NHK&GT;), 2 February 2000 (2000-02-02) * abstract * | 1-10 | |
| A | PATENT ABSTRACTS OF JAPAN vol. 1999, no. 03, 31 March 1999 (1999-03-31) & JP 10 322726 A (SANYO ELECTRIC CO LTD), 4 December 1998 (1998-12-04) * abstract * | 1-10 | |
| A | PATENT ABSTRACTS OF JAPAN vol. 1999, no. 09, 30 July 1999 (1999-07-30) & JP 11 095722 A (SANYO ELECTRIC CO LTD), 9 April 1999 (1999-04-09) * abstract * | 1-10 | TECHNICAL FIELDS SEARCHED (Int.Cl.7) H04N G09G |
| A | PATENT ABSTRACTS OF JAPAN vol. 2000, no. 07, 29 September 2000 (2000-09-29) & JP 2000 112428 A (NIPPON HOSO KYOKAI &LT;NHK&GT;), 21 April 2000 (2000-04-21) * abstract * | 1-10 | |

The present search report has been drawn up for all claims

| Place of search | Date of completion of the search | Examiner |
|---|---|---|
| THE HAGUE | 29 May 2002 | De Paepe, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 10 4234

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2002

| Patent document cited in search report | | Publication date | Patent family member(s) | | Publication date |
|---|---|---|---|---|---|
| EP 1049068 | A | 02-11-2000 | EP<br>CN<br>EP<br>JP | 1049068 A1<br>1271922 A<br>1058229 A1<br>2000352954 A | 02-11-2000<br>01-11-2000<br>06-12-2000<br>19-12-2000 |
| JP 2000036969 | A | 02-02-2000 | NONE | | |
| JP 10322726 9 | A | | NONE | | |
| JP 11095722 9 | A | | NONE | | |
| JP 2000112428 | A | 21-04-2000 | NONE | | |

EPO FORM P0459

For more details about this annex : see Official Journal of the European Patent Office, No. 12/82